# FASCICULE DE BREVET EUROPEEN

(11) **EP 2 494 295 B1**
(45) Date de publication et mention de la délivrance du brevet: **27.02.2019**
(21) Numéro de dépôt: 10793276.6
(22) Date de dépôt: 26.10.2010
(51) Int. Cl.: F25J 3/02, C10G 70/04

(54) **PROCÉDÉ DE FRACTIONNEMENT D'UN COURANT DE GAZ CRAQUÉ POUR OBTENIR UNE COUPE RICHE EN ÉTHYLÈNE ET UN COURANT DE COMBUSTIBLE, ET INSTALLATION ASSOCIÉE**
VERFAHREN ZUR FRAKTIONIERUNG EINES GERISSENEN GASFLUSSES ZUR GEWINNUNG EINES ETHYLENREICHEN AUSSCHNITTS UND EINES KRAFTSTOFFFLUSSES SOWIE ENTSPRECHENDE ANLAGE
METHOD FOR FRACTIONATING A CRACKED GAS FLOW IN ORDER TO OBTAIN AN ETHYLENE-RICH CUT AND A FUEL FLOW, AND ASSOCIATED FACILITY

(30) Priorité: 27.10.2009 FR 0957537
(43) Date de publication de la demande: 05.09.2012
(73) Titulaire: Technip France, 92400 Courbevoie (FR)
(72) Inventeur: LAUGIER, Jean-Paul, 75013 Paris (FR); SIMON, Yvon, 78570 Andresy (FR)
(74) Mandataire: Lavoix
(86) Numéro de dépôt international: PCT/FR2010/052290
(87) Numéro de publication internationale: WO 2011/051614

(56) Documents cités:
- US-A- 4 496 381
- US-A- 4 629 484
- US-A- 4 664 687
- US-A- 5 421 167
- US-A- 5 768 913
- US-A1- 2002 198 430
- US-A1- 2009 112 037
- HURSTEL X ET AL: "REFRIGERATION SCHEMES SERVE OLEFIN PLANT NEEDS", OIL AND GAS JOURNAL, PENNWELL, HOUSTON, TX, US, 7 septembre 1981 (1981-09-07), pages 107-123, XP009047287, ISSN: 0030-1388

## Description

La présente invention concerne un procédé de fractionnement d'un courant de gaz craqué issu d'une installation de pyrolyse d'hydrocarbures pour obtenir une coupe riche en éthylène et un courant de combustible pauvre en hydrocarbures en C2+ selon la revendication 1.

Le gaz craqué est issu d'une installation de pyrolyse d'hydrocarbures tel qu'un four de vapocraquage. Le gaz introduit dans l'installation de pyrolyse présente avantageusement au moins 70% d'éthane, en association avec du propane, du butane, du naphta, du et/ou du gasoil.

Le procédé du type précité est destiné à traiter le gaz craqué pour obtenir une coupe d'éthylène présentant une teneur en éthylène supérieure à 99,95 % en moles, en récupérant plus de 99,5 % en moles de l'éthylène contenu dans le gaz craqué.

Des procédés de l'état de la technique qui permettent d'obtenir de telles performances sont décrits par exemple dans EP 1 215 459 (=US2002/0198430) et US 4 629 484.

Ce procédé est destiné à être mis en oeuvre pour traiter de très grands volumes de gaz craqué, par exemple supérieur à 50 tonnes, notamment supérieur à 100 tonnes par heure. Pour garantir à la fois une très grande pureté du courant d'éthylène produit et un taux de récupération d'éthylène maximal, il est nécessaire de refroidir le gaz traité jusqu'à des températures inférieures à - 100°C et notamment inférieures à - 120°C.

A cet effet, le courant de gaz craqué est mis en relation d'échange thermique successivement avec du propylène circulant dans un premier cycle de réfrigération externe, puis avec de l'éthylène circulant dans un deuxième cycle de réfrigération externe.

Le cycle de réfrigération à l'éthylène comprend généralement trois niveaux thermiques, avec un premier échangeur thermique à environ - 50°C, un deuxième échangeur thermique à environ -75°C et un troisième échangeur thermique à environ - 100°C. Après chaque échange thermique, le gaz craqué partiellement condensé est introduit dans un séparateur pour évacuer le liquide formé.

Les liquides recueillis, qui sont généralement riches en hydrocarbures en C₂⁺, sont envoyés vers une unité de traitement comportant au moins une colonne de fractionnement. La colonne de fractionnement produit le courant contenant l'éthylène récupéré par le procédé cryogénique.

Compte tenu de l'utilisation de deux cycles de réfrigération et d'un cycle à base d'éthylène à trois niveaux thermiques, la consommation énergétique du procédé peut encore être améliorée.

Un but de l'invention est donc d'obtenir, avec un investissement inférieur (par suppression d'un niveau thermique délivré par un cycle de réfrigération), un procédé de fractionnement qui permette toujours de récupérer un courant riche en éthylène, avec un taux de récupération très élevé, tout en présentant des performances énergétiques améliorées.

A cet effet, l'invention a pour objet un procédé selon la revendication 1.

Le procédé selon l'invention peut comprendre l'une ou plusieurs des caractéristiques des revendications 2 à 14.

L'invention a également pour objet une installation de fractionnement d'un courant de gaz craqué issu d'une installation de pyrolyse d'hydrocarbures pour obtenir une coupe riche en éthylène et un courant de combustible pauvre en hydrocarbures en C₂⁺ selon la revendication 15.

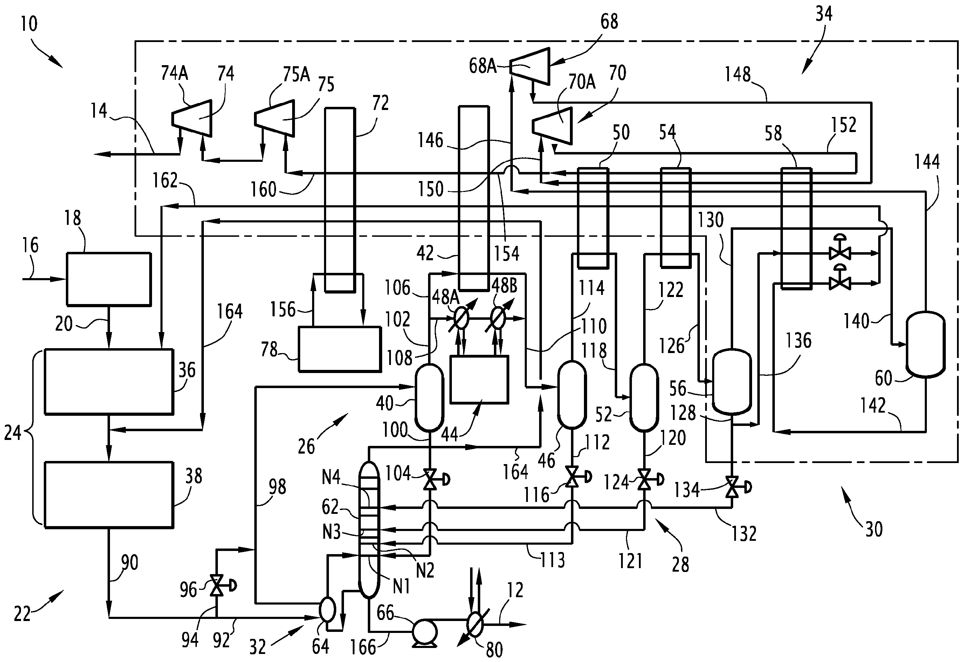

L'invention sera mieux comprise à la lecture de la description qui va suivre, donnée uniquement à titre d'exemple, et faite en se référant aux dessins annexés, sur lesquels :
- la figure unique est un schéma synoptique fonctionnel d'une première installation de fractionnement selon l'invention, destinée à la mise en oeuvre d'un premier procédé selon l'invention.

Dans tout ce qui suit, une même référence désigne un courant circulant dans une conduite et la conduite qui transporte ce courant. Par ailleurs, sauf indication contraire, les pourcentages sont des pourcentages molaires et les pressions s'entendent en bars relatifs.

Une première unité 10 de vapocraquage selon l'invention est représentée sur la figure.

Cette unité 10 est destinée à former une coupe 12 riche en éthylène et un courant 14 de gaz combustible pauvre en hydrocarbures en C₂⁺, à partir d'une charge 16.

L'unité 10 comprend une installation 18 de pyrolyse d'hydrocarbures comportant un four de vapocraquage destiné à produire un courant 20 de gaz craqué brut. Elle comporte en outre une installation 22 de fractionnement du gaz traité brut pour former le courant de gaz de combustible 14 et la coupe riche en éthylène 12.

La charge 16 est avantageusement formée d'au moins 70% en moles d'éthane, en association avec du propane, du butane, du naphta et/ou du gasoil.

Le four de vapocraquage 18 est propre à faire circuler la charge 16 pour la chauffer à une température supérieure à 800°C. Ceci provoque le craquage thermique des molécules d'hydrocarbures contenues dans la charge 16 afin de former le courant de gaz craqué brut 20.

L'installation de fractionnement 22 comporte successivement un ensemble 24 de refroidissement et de compression, et un ensemble amont 26, un ensemble aval 30 et un ensemble intermédiaire 28 de refroidissement et de séparation du gaz craqué.

L'installation 22 comporte en outre un ensemble 32 de traitement des liquides formés dans les ensembles 26 à 30, et un ensemble 34 de détente et de réchauffage du gaz combustible.

L'ensemble de compression 24 comporte une étape de refroidissement et un compresseur primaire 36 et un compresseur secondaire 38, le compresseur secondaire étant disposé en aval du compresseur primaire 36.

L'ensemble amont 26 de refroidissement et de séparation comporte un premier ballon séparateur amont 40, un échangeur thermique amont 42, un cycle de réfrigération 44 à l'éthylène, et un deuxième ballon séparateur amont 46.

Le cycle à l'éthylène 44 comporte deux échangeurs thermiques de cycle 48A, 48B dans lequel circule de l'éthylène. La température d'entrée de l'éthylène est inférieure à - 45°C, avantageusement comprise entre - 45°C et - 60°C dans l'échangeur 48A, et est inférieure à -65°C et comprise notamment entre - 65°C et - 80°C dans l'échangeur 48B. Les échangeurs 48A et 48B peuvent être intégrés dans l'échangeur thermique amont 42.

L'ensemble intermédiaire 28 de refroidissement et de séparation comporte, d'amont en aval, un premier échangeur thermique intermédiaire 50, un premier ballon séparateur intermédiaire 52, puis un deuxième échangeur thermique intermédiaire 54, et un deuxième ballon séparateur intermédiaire 56.

L'ensemble aval 30 de refroidissement et de séparation comprend un échangeur thermique aval 58, et un ballon séparateur aval 60 destiné à produire le courant de gaz combustible.

L'ensemble 32 de traitement des liquides comporte une colonne de fractionnement 62, un échangeur thermique de rebouillage 64, et une pompe 66 de fond de colonne.

L'ensemble 34 de détente et de réchauffage comprend un premier appareil de détente dynamique 68, un deuxième appareil de détente dynamique 70, les appareils 68, 70 présentant chacun au moins une turbine de détente dynamique 68A, 70A.

L'ensemble 34 de détente et de réchauffage comporte en outre un échangeur thermique 72 de réchauffage, un premier appareil 74 de compression et un deuxième appareil 75 de compression, les appareils 74 et 75 présentant chacun au moins un compresseur 74A et 75A, qui sont chacun accouplés à une turbine de détente 68A, 70A respective du premier appareil de détente dynamique 68 et du deuxième appareil de détente dynamique 70.

L'échangeur thermique de réchauffage 72 refroidit un fluide réfrigérant circulant dans un cycle 78 de réfrigération au propylène. Le cycle au propylène 78 comporte un échangeur thermique de pied 80 placé en aval de la pompe 66 de fond de colonne. L'échangeur 80 peut être intégré dans l'échangeur 72.

Un premier procédé selon l'invention, mis en oeuvre dans l'unité 10 pour traiter le courant de gaz craqué issu du vapocraquage d'une charge 16, va maintenant être décrit.

Initialement, la charge 16 contenant majoritairement de l'éthane est introduite dans le four de vapocraquage 18 pour être chauffée à une température supérieure à 800°C et subir un craquage thermique.

Un courant de gaz craqué brut 20 est extrait du four 18 à une température supérieure à 800 °C et à une pression supérieure à 1 bars.

Ce courant 20 est ensuite refroidi et introduit dans le compresseur primaire 36 pour être comprimé à une pression supérieure à 10 bars sensiblement inférieure à la pression dans la colonne de fractionnement 62, puis dans le compresseur secondaire 38 pour être comprimé à une pression supérieure à 30 bars.

Le courant de gaz craqué 90 comprimé issu du compresseur secondaire 38 est ensuite séparé en une première fraction de rebouillage 92 et en une deuxième fraction 94.

La fraction de rebouillage 92 est introduite dans l'échangeur thermique 64 de fond de colonne pour y être refroidie et partiellement condensée. La deuxième fraction 94 est passée à travers une première vanne 96 de contrôle de débit, avant d'être mélangée avec la fraction 92 de rebouillage issue de l'échangeur 64 pour former un courant de gaz craqué 98 partiellement condensé.

Dans une variante du procédé, le courant de gaz craqué 90 peut avantageusement circuler, partiellement ou en totalité, au travers de l'échangeur thermique de réchauffage 72 avant la séparation en les flux 92 et 96, afin de refroidir dans l'échangeur 72.

Le rapport molaire de la première fraction de rebouillage 92 à la deuxième fraction 94 est compris entre 5% et 20%. Le courant de gaz craqué 98 partiellement condensé contient au moins 15% molaires de liquide. Il présente une température inférieure à -30 °C.

Puis, le courant 98 est introduit dans le premier ballon séparateur amont 40 pour former un premier liquide amont 100 et un courant amont de gaz craqué 102.

Le premier liquide amont 100 est prélevé dans le fond du premier ballon séparateur 40 et est introduit à un niveau inférieur N1 de la colonne de fractionnement 62, après passage et détente dans une deuxième vanne 104 de contrôle de débit.

La pression dans la colonne de fractionnement 62 est avantageusement comprise entre 10 bars et 14 bars.

Le courant amont 102 est ensuite séparé en un premier flux gazeux 106 de gaz craqué et en deuxième flux gazeux 108 de gaz craqué. Le rapport du débit molaire du premier flux 106 au débit molaire du courant amont 102 est supérieur à 8%.

Le premier flux 106 est refroidi jusqu'à une température inférieure à - 63°C et notamment sensiblement comprise entre - 63°C et - 78°C dans l'échangeur thermique amont 42.

Le deuxième flux gazeux 108 est introduit successivement dans le premier échangeur thermique de cycle 48A pour être refroidi jusqu'à une température inférieure à - 43°C par échange thermique avec l'éthylène circulant dans le cycle 44. Puis, il est introduit dans le deuxième échangeur thermique de cycle 48B pour être refroidi jusqu'à une température inférieure à - 63°C, et notamment comprise entre - 63°C et - 78°C.

Après refroidissement, les flux 106 et 108, sont mélangés et forment un courant amont 110 partiellement condensé de gaz craqué qui est introduit dans le deuxième ballon séparateur amont 46.

La teneur molaire en liquide dans le courant amont de gaz craqué partiellement condensé 110 est comprise entre 30% et 60%. Dans le deuxième ballon séparateur amont 46, le courant 110 se sépare en un deuxième liquide amont 112 et en un premier courant gazeux intermédiaire 114 de gaz craqué refroidi à une première température inférieure à -63°C.

Le deuxième liquide amont 112 est récupéré au fond du deuxième ballon séparateur amont 46. Il forme le courant 113 après passage et détente dans une troisième vanne 116 de contrôle de débit et est introduit à un niveau N2 de la colonne de fractionnement 62 située au dessus du niveau N1.

Le premier courant intermédiaire 114 de gaz craqué est introduit dans le premier échangeur thermique intermédiaire 50 pour y être refroidi à une température inférieure à - 85°C et former un courant intermédiaire 118 partiellement condensé de gaz craqué. Le courant 118 présente une température inférieure à - 85°C, et une teneur en liquide comprise entre 8% en moles et 30% en moles.

Le courant 118 est ensuite introduit dans le premier ballon séparateur intermédiaire 52 pour former un premier liquide intermédiaire 120 et un deuxième courant gazeux intermédiaire 122 de gaz craqué.

Le premier liquide intermédiaire 120 est récupéré au fond du ballon 52. Il forme le courant 121, après passage et détente à travers une quatrième vanne 124 de contrôle de débit, avant d'être introduit à un troisième niveau N3 de la colonne de fractionnement 62, situé au-dessus du niveau N2.

Dans une variante du procédé, les courants 113 et 121 peuvent être combinés avant d'alimenter la colonne de fractionnement 62.

Le deuxième courant gazeux intermédiaire 122 est ensuite introduit dans le deuxième échangeur thermique intermédiaire 54 pour y être refroidi à une deuxième température inférieure à -105°C et comprise entre - 105°C et - 120°C.

A la sortie du deuxième échangeur thermique intermédiaire 54, le deuxième courant intermédiaire 126 partiellement condensé est introduit dans le deuxième ballon séparateur intermédiaire 56 pour y être séparé en un deuxième liquide intermédiaire 128 et en un courant aval de gaz craqué 130.

Une première fraction 132 du deuxième liquide intermédiaire 128 est introduite à un niveau N4 de la colonne de fractionnement 62 situé au-dessus du niveau N3, après passage et détente dans une cinquième vanne 134 de contrôle de débit. Une deuxième fraction 136 de recirculation du deuxième liquide intermédiaire 128 est sous-refroidie dans l'échangeur thermique aval 58, comme on le verra plus bas.

Le courant aval de gaz craqué 130 est ensuite introduit dans l'échangeur thermique aval 58 pour y être refroidi et former un courant aval 140 de gaz craqué partiellement condensé. La température du courant 140, à la sortie de l'échangeur thermique aval 58 est inférieure à -125°C et est notamment comprise entre - 125°C et - 140°C.

Le courant 140 est ensuite introduit dans le ballon séparateur aval 60 pour y être séparé en un liquide aval 142 et en un courant de gaz combustible 144 à haute pression destiné à être détendu. Le courant de gaz de combustible 144 comporte plus de 75% en moles d'hydrogène et moins de 0.5% en moles d'hydrocarbures en C₂⁺.

Le courant 144 est introduit une première fois dans l'échangeur thermique aval 58 pour se réchauffer par échange thermique à contre-courant avec le courant aval 130 de gaz craqué refroidi, puis dans le deuxième échangeur thermique intermédiaire 54 pour se réchauffer à contre-courant notamment du deuxième courant 122 intermédiaire de gaz craqué, jusqu'à une température supérieure à - 110°C.

Il est ensuite introduit dans le premier échangeur thermique aval 50 pour y être réchauffé par échange thermique avec le premier courant intermédiaire de gaz craqué 114 jusqu'à une température supérieure à - 85°C.

Le courant de gaz combustible à haute pression 146 réchauffé à une température supérieure à -85°C est ensuite introduit dans une turbine de détente dynamique 68A du premier appareil de détente dynamique 68 pour être détendu jusqu'à une pression inférieure à 12 bars et former un courant 148 de gaz combustible à pression intermédiaire.

La température du courant 148 est inférieure à -115°C. Le courant 148 est alors introduit à nouveau dans l'échangeur thermique aval 58, dans le deuxième échangeur thermique intermédiaire 54, puis dans le premier échangeur thermique intermédiaire 50 pour se réchauffer successivement par échange thermique respectivement avec le courant 130, le courant 122 et le courant 114, comme décrit précédemment. Ce passage du courant 148 à travers les échangeurs 50, 54, 58 s'effectue entre une turbine 68A du premier appareil 68 et une turbine 70A du deuxième appareil 70.

Le courant 150 de gaz combustible réchauffé à pression intermédiaire est ensuite introduit dans une turbine 70A de détente dynamique du deuxième appareil 70 de détente dynamique pour y être détendu à une pression inférieure à 4 bars et former un courant de gaz combustible 152 à basse pression refroidi.

La température du courant 152 est alors inférieure à -115°C, et sa pression est inférieure à 4 bars.

Le courant 152 est ensuite introduit successivement dans l'échangeur thermique aval 58, dans le deuxième échangeur thermique intermédiaire 54, puis dans le premier échangeur thermique 50 pour y être réchauffé à contre-courant respectivement du courant 130, du courant 122, et du courant 114 comme décrit plus haut.

Le courant de gaz combustible 154 basse pression réchauffé issu du premier échangeur thermique intermédiaire 50 est ensuite introduit successivement dans l'échangeur thermique amont 42 pour être placé en relation d'échange thermique avec le premier flux gazeux 106 issu du premier courant gazeux de gaz craqué 102, puis dans l'échangeur thermique de réchauffage 72.

Dans l'échangeur thermique de réchauffage 72, le courant 154 se réchauffe par échange thermique avec le fluide réfrigérant 156 au propylène circulant dans le cycle de réfrigération 78.

Le courant 160 de gaz combustible réchauffé à basse pression issu de l'échangeur 72 présente ainsi une pression proche de la pression atmosphérique.

Le courant 160 est ensuite introduit successivement dans le compresseur 75A du deuxième appareil de compression 75, puis dans le compresseur 74A de l'appareil de compression aval 74 pour former le courant de combustible 14 destiné à alimenter le réseau de l'installation. La pression du courant 14 est supérieure à 5 bars.

La teneur en éthylène dans le gaz combustible 144 haute pression, comme dans le gaz combustible 14 est inférieure à 0,5% molaires. Le taux de récupération d'éthylène dans l'installation est supérieur à 99,5%.

Le courant de combustible 14 comprend avantageusement plus de 99% du méthane contenu dans le courant de gaz craqué brut 20.

Le liquide aval 142 comporte plus de 25% en moles d'hydrocarbures en C₂⁺. Il est introduit dans l'échangeur thermique aval 58 pour y être sous-refroidi jusqu'à une température inférieure à -120°C.

Après leur passage dans l'échangeur 58, les liquides 136, 142 sont mélangés et sont introduits successivement dans les échangeurs thermiques 58, 54, 50, 42 et 72 pour se réchauffer et s'évaporer par échange thermique avec les courants respectifs circulant dans ces échangeurs.

Ils forment alors un courant gazeux 162 de recyclage réchauffé qui présente une température supérieure à 10°C. Le courant gazeux 162 est réintroduit dans le courant de gaz craqué brut 20, dans le compresseur primaire 36. Dans une variante du procédé, les liquides 136 et 142 sont introduits séparément dans les échangeurs thermiques 58,54, 50, 42, 72 pour se réchauffer, avant d'être réintroduits dans le courant de gaz craqué brut 20.

La colonne de fractionnement 62 produit un courant de tête 164 riche en méthane et un courant de pied 166 riche en éthylène.

Le courant de tête 164 est introduit, après réchauffage dans l'échangeur thermique amont 42, puis après réchauffage dans l'échangeur thermique de réchauffage 72, dans le courant de gaz craqué brut 20, entre le compresseur primaire 36 et le compresseur secondaire 38.

Le courant de pied 166 issu de la colonne de fractionnement 62 est pompé par la pompe 66, avant d'être introduit dans l'échangeur thermique de récupération 80 (qui peut être intégré dans l'échangeur 72). Il est alors réchauffé au contact du propylène formant le fluide réfrigérant du cycle 78. Après passage dans l'échangeur 80, la coupe 12 riche en éthylène est formée. Cette coupe 12 comporte plus de 99,5% en moles de l'éthylène contenu dans le courant de gaz craqué brut 20.

Selon l'invention, le courant intermédiaire de gaz craqué 114 qui est refroidi à une température inférieure à - 63°C grâce à la réfrigération fournie par le cycle à l'éthylène 44 est ensuite refroidi jusqu'à une température inférieure à - 90°C exclusivement par échange thermique avec le courant de gaz combustible 144 à haute pression, avec le courant de gaz combustible partiellement détendu 148 et avec le courant de gaz combustible détendu 152, et par le réchauffage des liquides 142, 136 issus des ballons 56, 60, dans les échangeurs thermiques 50, 54 et 58.

Il n'est donc pas nécessaire de prévoir un cycle de réfrigération à l'éthylène 44 comportant un niveau thermique à -100°C (usuellement entre -95°C et -102°C), entre le ballon amont 46 et le ballon aval 60. Ceci diminue la consommation énergétique du procédé et l'investissement nécessaire pour sa mise en oeuvre.

Ainsi, l'utilisation adéquate du potentiel de détente et de la capacité calorifique élevée du gaz combustible haute pression 144 formé à la sortie du ballon aval 60, en raison de sa richesse en hydrogène, permet de diminuer grandement la consommation énergétique du procédé. Il est ainsi possible de diminuer d'au moins 30 KWh par tonne d'éthylène produit par heure la puissance spécifique de réfrigération par rapport à une unité connue de l'état de la technique, et ce en conservant un taux de récupération d'éthane supérieur à 99,5 % et en produisant une coupe 12 riche en éthylène.

Ce résultat est obtenu en diminuant l'investissement nécessaire pour l'installation, puisqu'il n'est plus nécessaire de prévoir un compresseur spécifique et un échangeur thermique spécifique pour un niveau thermique à -100°C dans le cycle à l'éthylène 44.

Dans une variante, chaque appareil de détente dynamique 68 comprend une pluralité de turbines de détente dynamique, par exemple de 2 à 3 turbines de détente dynamique. Dans une autre variante, un compresseur additionnel est placé en aval des compresseurs 76A, 76B pour comprimer à une pression plus élevée le gaz combustible 14.

Dans d'autres variantes, l'unité de traitement comprend une pluralité de colonnes de fractionnement comme décrit par exemple dans EP 1 215 459.

On notera, comme cela est représenté sur la Figure unique, que la totalité du courant de combustible haute pression 144 est réchauffée successivement dans l'échangeur thermique aval, et dans les échangeurs thermiques intermédiaires 50, 54 avant d'être introduite en totalité dans le premier appareil de détente dynamique 68.

De même, la totalité du courant de combustible partiellement détendu 148 issue du premier appareil de détente dynamique 68 est passée successivement dans l'échangeur aval 58 et dans les échangeurs intermédiaires 50, 54, avant d'être introduite en totalité dans le deuxième appareil de détente dynamique 70. La totalité du courant de combustible détendu 152 issu du deuxième appareil de détente dynamique 70 est ensuite introduite dans l'échangeur thermique aval 58 et dans les échangeurs thermiques intermédiaires 50, 54.

Ainsi, la récupération de frigories est maximale pour permettre le refroidissement du gaz.

On notera en outre que les ballons 40, 46 et 52, 56 et 60 sont de simples ballons séparateurs, et non des colonnes de distillation. Ainsi, ces ballons sont dépourvus de plateaux ou de garnissage

La colonne de fractionnement 62 est une colonne de type stripper. Ainsi, le courant de tête 164 riche en méthane issu de la colonne 62 est totalement renvoyé dans le gaz craqué brut 20, sans qu'une fraction de ce courant 164 ne soit condensée pour être envoyée en reflux dans la colonne 62.

Par ailleurs, la puissance thermique nécessaire au refroidissement du courant aval de gaz craqué 130 vers la troisième température est fournie dans l'échangeur thermique aval 58 par échange thermique avec le courant de combustible haute pression 144, par échange thermique avec le courant de combustible partiellement détendu, et par échange thermique avec le courant de combustible détendu 152, sans échange thermique avec un fluide réfrigérant externe circulant dans un cycle de réfrigération, et notamment sans échange thermique avec le fluide réfrigérant circulant dans le cycle de réfrigération 44.

Comme on l'a vu plus haut, il n'est donc pas nécessaire de munir le cycle 44 d'un étage de réfrigération à une température de l'ordre de -100°C, et notamment comprise entre - 85°C et - 102°C.

## Revendications

1. Procédé de fractionnement d'un courant (20) de gaz craqué issu d'une installation (18) de pyrolyse d'hydrocarbures pour obtenir une coupe (12) riche en éthylène et un courant (14) de combustible pauvre en hydrocarbures en C₂⁺, le procédé comprenant les étapes suivantes :
- refroidissement amont et condensation partielle d'un courant de gaz craqué brut (20) par échange thermique au moins partiel avec un fluide réfrigérant circulant dans un premier cycle (44) de réfrigération externe et séparation d'un liquide amont (112) dans au moins un ballon amont (46) pour former un courant intermédiaire (114) de gaz craqué pré-refroidi à une première température ;
- refroidissement intermédiaire et condensation partielle du courant intermédiaire de gaz craqué (114) dans au moins un échangeur thermique (50, 54) intermédiaire et séparation d'un liquide intermédiaire (120, 128) dans au moins un ballon de séparation intermédiaire (52, 56) pour former un courant aval (130) de gaz craqué refroidi à une deuxième température inférieure à la première température ;
- refroidissement aval et condensation partielle du courant aval de gaz craqué (130) dans au moins un échangeur thermique aval (58) jusqu'à une troisième température inférieure à la deuxième température ;
- introduction du courant aval (140) de gaz craqué partiellement condensé issu de l'échangeur thermique aval (58) dans un séparateur aval (60) ;
- récupération, en tête du séparateur aval (60), d'un courant (144) gazeux de combustible à haute pression, pauvre en hydrocarbures en C₂⁺, et récupération, en pied du séparateur aval, d'un liquide aval (142), riche en hydrocarbures en C₂⁺;
- passage du courant (144) de combustible haute pression à travers l'échangeur aval (58) et l'échangeur intermédiaire (50, 54) pour former un courant (146) de combustible haute pression réchauffé ;
- détente du courant (146) de combustible haute pression réchauffé dans au moins un premier appareil (68) de détente dynamique pour obtenir un courant (148) de combustible partiellement détendu;
- réchauffage du courant (148) de combustible partiellement détendu à travers l'échangeur aval (58) et l'échangeur intermédiaire (50, 54) ;
- traitement d'au moins un liquide (112, 120, 128) obtenu lors des étapes de refroidissement amont, de refroidissement intermédiaire et de refroidissement aval pour former la coupe riche en éthylène (12) ;
le procédé comprenant les étapes suivantes :
- passage du courant (148) de combustible partiellement détendu issu de l'échangeur intermédiaire (50, 54) dans un deuxième appareil de détente dynamique (70) pour former un courant (152) de combustible détendu ;
- réchauffage du courant (152) de combustible détendu issu du deuxième appareil de détente dynamique (70) dans l'échangeur thermique aval (58) et dans l'échangeur thermique intermédiaire (50, 54) ;
- compression du courant (160) de combustible détendu réchauffé dans au moins un compresseur (76A, 76B) accouplé à au moins une turbine de détente (68A, 70A) du premier appareil de détente dynamique ou/et du deuxième appareil de détente dynamique pour former le courant (14) de combustible pauvre en hydrocarbures en C₂⁺, et
la puissance thermique nécessaire au refroidissement du courant intermédiaire de gaz craqué (114) vers la deuxième température est fournie dans l'échangeur thermique intermédiaire (50, 54) par échange thermique avec le courant (144) de combustible haute pression, par échange thermique avec le courant (148) de combustible partiellement détendu et par échange thermique avec le courant (152) de combustible détendu, sans échange thermique avec un fluide réfrigérant externe circulant dans un cycle de réfrigération.

2. Procédé selon la revendication 1, **caractérisé en ce que** la puissance thermique nécessaire au refroidissement du courant aval de gaz craqué (130) jusqu'à la troisième température est fournie dans l'échangeur thermique aval (58) par échange thermique avec le courant (144) de combustible à haute pression, par échange thermique avec le courant (148) de combustible partiellement détendu et par échange thermique avec le courant (152) de combustible détendu, sans échange thermique avec un fluide réfrigérant externe circulant dans un cycle de réfrigération.

3. Procédé selon l'une quelconque des revendications précédentes, **caractérisé en ce qu'**il comprend la récupération du liquide aval (142) et son réchauffage à travers l'échangeur thermique aval (58), et l'échangeur thermique intermédiaire (50, 54),
le liquide aval étant sous-refroidi dans l'échangeur thermique aval (58) avant son réchauffage dans l'échangeur thermique aval (58), puis dans l'échangeur thermique intermédiaire (50, 54).

4. Procédé selon l'une quelconque des revendications précédentes, **caractérisé en ce que** la totalité du courant de combustible haute pression réchauffé (146) issu de l'échangeur intermédiaire (50, 54) est introduite dans le premier appareil de détente dynamique (68), la totalité du courant de combustible partiellement détendu réchauffé (150) issu de l'échangeur intermédiaire (50, 54) étant introduite dans le deuxième appareil de détente dynamique (70).

5. Procédé selon l'une quelconque des revendications précédentes, **caractérisé en ce qu'**au moins une fraction (136) d'un liquide intermédiaire (128) récupéré à l'étape de refroidissement intermédiaire est réchauffée dans l'échangeur thermique aval (58) et dans l'échangeur thermique intermédiaire (50, 54).

6. Procédé selon la revendication 5, **caractérisé en ce que** la fraction (136) du liquide intermédiaire (128) récupéré à l'étape de refroidissement intermédiaire est sous-refroidie dans l'échangeur thermique aval (58) avant d'être réintroduite dans l'échangeur thermique aval (58), puis dans l'échangeur thermique intermédiaire (50, 54).

7. Procédé selon l'une quelconque des revendications 3 à 6, **caractérisé en ce qu'**au moins un parmi la au moins une fraction (136) du liquide intermédiaire (128) et le liquide aval (142) s'évapore lors de son passage dans l'échangeur thermique aval (58) et dans l'échangeur thermique intermédiaire (50, 54) pour former un courant gazeux (162) de recirculation, le courant de recirculation (162) étant mélangé au courant de gaz craqué brut (20), avant le passage du courant de gaz craqué brut (20) dans au moins un compresseur (38).

8. Procédé selon l'une quelconque des revendications précédentes, **caractérisé en ce que** l'étape de traitement comprend l'introduction d'au moins un courant (112, 120, 132) formé à partir du liquide amont (112), du liquide intermédiaire (120, 128) et/ou du liquide aval (142) dans une colonne (62) de fractionnement et la production dans la colonne de fractionnement (62) d'un courant (166) riche en éthylène destiné à former la coupe (12) riche en éthylène.

9. Procédé selon la revendication 8, **caractérisé en ce qu'**à l'étape de traitement, le liquide amont (112) et le liquide intermédiaire (120) sont introduits dans la colonne de fractionnement (62).

10. Procédé selon l'une quelconque des revendications précédentes, **caractérisé en ce que** le courant de tête (164) issu de la colonne de fractionnement (62) est convoyé en totalité vers l'échangeur thermique amont (42) et avantageusement vers un échangeur amont de réchauffage (72), avant d'être mélangé au gaz craqué brut (20), sans qu'une fraction de ce courant (164) ne soit condensée pour être envoyée en reflux dans la colonne de fractionnement (62).

11. Procédé selon l'une quelconque des revendications précédentes, **caractérisé en ce que** le premier appareil de détente dynamique (68) et le deuxième appareil de détente dynamique (70) comprennent chacun au moins une turbine (68A, 70A) de détente dynamique, avantageusement comprennent chacun entre deux et trois turbines de détente dynamique.

12. Procédé selon l'une quelconque des revendications précédentes, **caractérisé en ce que** la teneur molaire en hydrogène dans le courant (144) de combustible haute pression est supérieure à 75%.

13. Procédé selon l'une quelconque des revendications précédentes, **caractérisé en ce que** la première température est inférieure à - 63° C, **en ce que** la deuxième température est inférieure à - 85°C, et **en ce que** la troisième température est inférieure à - 120°C.

14. Procédé selon l'une quelconque des revendications précédentes, **caractérisé en ce que** le premier cycle de réfrigération est dépourvu de niveau thermique entre - 95°C et - 102°C entre le ballon amont (46) et le ballon aval (60).

15. Installation (22) de fractionnement d'un courant (20) de gaz craqué issu d'une installation (18) de pyrolyse d'hydrocarbures pour obtenir une coupe (12) riche en éthylène et un courant (14) de combustible pauvre en hydrocarbures en C₂⁺, l'installation (22) comprenant :
- des moyens amont de refroidissement et de condensation partielle d'un courant de gaz craqué brut (20) comportant des moyens (48A, 48B) d'échange thermique au moins partiel avec un premier cycle (44) de réfrigération externe et des moyens de séparation d'un liquide amont (112) comportant au moins un ballon amont (46) pour former un courant intermédiaire (114) de gaz craqué pré-refroidi à une première température ;
- des moyens intermédiaire de refroidissement et de condensation partielle du courant intermédiaire de gaz craqué (114) comportant au moins un échangeur thermique (50, 54) intermédiaire et des moyens de séparation d'un liquide intermédiaire (120, 128) comportant au moins un ballon de séparation intermédiaire (52, 56) pour former un courant aval (130) de gaz craqué refroidi à une deuxième température inférieure à la première température ;
- des moyens de refroidissement aval et de condensation partielle du courant aval de gaz craqué (130) comportant au moins un échangeur thermique aval (58) pour refroidir le courant aval de gaz craqué (130) jusqu'à une troisième température inférieure à la deuxième température ;
- un séparateur aval (60) et des moyens d'introduction du courant aval (140) de gaz craqué issu de l'échangeur thermique aval (58) dans le séparateur aval (60) ;
- des moyens de récupération, en tête du séparateur aval (60), d'un courant (144) gazeux de combustible à haute pression pauvre en hydrocarbures en C₂+ et des moyens de récupération, en pied du séparateur aval (60), d'un liquide aval (142) riche en hydrocarbures en C₂⁺;
- des moyens de passage du courant (144) de combustible haute pression à travers l'échangeur aval (58) et l'échangeur intermédiaire (50, 54) pour former un courant (146) combustible haute pression réchauffé ;
- des moyens de détente du courant (146) de combustible haute pression réchauffé comportant au moins un premier appareil (68) de détente dynamique pour former un courant (148) de combustible partiellement détendu ;
- des moyens de réchauffage du courant (148) de combustible partiellement détendu à travers l'échangeur aval (58) et l'échangeur intermédiaire (50, 54) ;
- des moyens de traitement d'au moins un liquide (112, 120, 128) obtenu à partir des moyens de refroidissement amont, des moyens de refroidissement intermédiaire et des moyens de refroidissement aval pour former la coupe riche en éthylène (12) ;
l'installation (22) comprenant :
- un deuxième appareil de détente dynamique (70) et des moyens de passage du courant (148) de combustible partiellement détendu issu de l'échangeur intermédiaire (50, 54) dans le deuxième appareil de détente dynamique (70) pour former un courant (152) de combustible détendu ;
- des moyens de réchauffage du courant (152) de combustible détendu issu du deuxième appareil de détente dynamique (70) dans l'échangeur thermique aval (58) et dans l'échangeur thermique intermédiaire (50, 54) ;
- des moyens de compression du courant (160) de combustible détendu réchauffé comportant au moins un compresseur (76A, 76B) accouplé à au moins une turbine de détente (68A, 70A) du premier appareil de détente dynamique ou/et du deuxième appareil de détente dynamique pour former le courant (14) de combustible pauvre en hydrocarbures en C₂⁺, et en ce que la puissance thermique nécessaire au refroidissement du courant intermédiaire de gaz craqué (114) vers la deuxième température est fournie dans l'échangeur thermique intermédiaire (50, 54) par échange thermique avec le courant (144) de combustible haute pression, par échange thermique avec le courant (148) de combustible partiellement détendu et par échange thermique avec le courant (152) de combustible détendu, sans échange thermique avec un fluide réfrigérant externe circulant dans un cycle de réfrigération.

## Patentansprüche

1. Verfahren zum Fraktionieren eines Stroms (20) gekrackten Gases, das von einer Einrichtung (18) zur Pyrolyse von Kohlenwasserstoffen stammt, zum Erlangen einer Ethylen-reichen Fraktion (12) und eines Stroms (14) aus Brennstoff, der arm an Kohlenwasserstoffen von C₂⁺ ist, wobei das Verfahren die folgenden Schritte aufweist:
- Stromaufwärts-Abkühlen und Teilkondensieren eines Stroms rohen gekrackten Gases (20) durch Wärmetausch zumindest teilweise mit einem Kältefluid, das in einem ersten, externen Kälte-Kreislauf (44) zirkuliert, und Separieren einer Stromaufwärts-Flüssigkeit (112) in wenigstens einen Stromaufwärts-Behälter (46) zum Bilden eines Zwischen-Stroms (114) gekrackten Gases, das auf eine erste Temperatur vorgekühlt ist,
- Zwischen-Abkühlen und Teilkondensieren des Zwischen-Stroms gekrackten Gases (114) in wenigstens einem Zwischen-Wärmetauscher (50, 54) und Separieren einer Zwischen-Flüssigkeit (120, 128) in wenigstens einen Zwischen-Separationsbehälter (52, 56) zum Bilden eines Stromabwärts-Stroms (130) gekrackten Gases, das auf eine zweite Temperatur abgekühlt ist, die kleiner als die erste Temperatur ist,
- Stromabwärts-Abkühlen und Teilkondensieren des Stromabwärts-Stroms gekrackten Gases (130) in wenigstens einem Stromabwärts-Wärmetauscher (58) bis auf eine dritte Temperatur, die kleiner als die zweite Temperatur ist,
- Einbringen des Stromabwärts-Stroms (140) teilkondensierten gekrackten Gases, das von dem Stromabwärts-Wärmetauscher (58) kommt, in einen Stromabwärts-Separator (60),
- Wiedergewinnen, am Kopf des Stromabwärts-Separators (60), eines gashaltigen Stroms (144) von Brennstoff hohen Drucks, der arm an Kohlenwasserstoffen von C₂⁺ ist, und Wiedergewinnen, am Fuß des Stromabwärts-Separators, einer Stromabwärts-Flüssigkeit (142), die reich an Kohlenwasserstoffen von C₂⁺ ist,
- Passieren des Stroms (144) von Brennstoff hohen Drucks durch den Stromabwärts-Tauscher (58) und den Zwischen-Tauscher (50, 54) zum Bilden eines Stroms (146) von erwärmtem Brennstoff hohen Drucks,
- Expandieren des Stroms (146) von erwärmtem Brennstoff hohen Drucks in wenigstens einer ersten Vorrichtung (68) zur dynamischen Expansion zum Bilden eines Stroms (148) von teilexpandiertem Brennstoff,
- Erwärmen des Stroms (148) von teilexpandiertem Brennstoff durch den Stromabwärts-Wärmetauscher (58) und den Zwischen-Wärmetauscher (50, 54),
- Behandeln wenigstens einer Flüssigkeit (112, 120, 128), die während der Schritte des Stromaufwärts-Abkühlens, des Zwischen-Abkühlens und des Stromabwärts-Abkühlens erlangt wurde, zum Bilden der Ethylen-reichen Fraktion (12),
wobei das Verfahren die folgenden Schritte aufweist:
- Passieren des Stroms (148) von teilexpandiertem Brennstoff, der von dem Zwischen-Tauscher (50, 54) kommt, durch eine zweite Vorrichtung zur dynamischen Expansion (70) zum Bilden eines Stroms (152) von expandiertem Brennstoff,
- Erwärmen des Stroms (152) von expandiertem Brennstoff, der von der zweiten Vorrichtung zur dynamischen Expansion (70) kommt, in dem Stromabwärts-Wärmetauscher (58) und in dem Zwischen-Wärmetauscher (50, 54),
- Verdichten des Stroms (160) von erwärmtem expandiertem Brennstoff in wenigstens einem Verdichter (76A, 76B), der mit wenigstens einer Expansionsturbine (68A, 70A) der ersten Vorrichtung zur dynamischen Expansion und/oder der zweiten Vorrichtung zur dynamischen Expansion verbunden ist, zum Bilden des Stroms (14) von Brennstoff, der arm an Kohlenwasserstoffen von C₂⁺ ist, wobei
die thermische Leistung, die erforderlich ist zum Kühlen des Zwischen-Stroms gekrackten Gases (114) zu der zweiten Temperatur hin, in den Zwischen-Wärmetauscher (50, 54) zugeführt wird durch Wärmetausch mit dem Strom (144) von Brennstoff hohen Drucks, durch Wärmetausch mit dem Strom (148) von teilexpandiertem Brennstoff und durch Wärmetausch mit dem Strom (152) von expandiertem Brennstoff, ohne Wärmetausch mit einem externen Kältefluid, das in einem Kältemittelkreislauf zirkuliert.

2. Verfahren gemäß Anspruch 1, **dadurch gekennzeichnet, dass** die thermische Leistung, die erforderlich ist zum Kühlen des Stromabwärts-Stroms gekrackten Gases (130) bis auf die dritte Temperatur, in dem Stromabwärts-Wärmetauscher (58) zugeführt wird durch Wärmetausch mit dem Strom (144) von Brennstoff hohen Drucks, durch Wärmetausch mit dem Strom (148) von teilexpandiertem Brennstoff und durch Wärmetausch mit dem Strom (152) von expandiertem Brennstoff, ohne Wärmetausch mit einem externen Kältefluid, das in einem Kältemittelkreislauf zirkuliert.

3. Verfahren gemäß irgendeinem der vorhergehenden Ansprüche, **dadurch gekennzeichnet, dass** es aufweist das Wiedergewinnen der Stromabwärts-Flüssigkeit (142) und deren Erwärmen durch den Stromabwärts-Wärmetauscher (58) und den Zwischen-Wärmetauscher (50, 54),
wobei die Stromabwärts-Flüssigkeit unterkühlt wird in dem Stromabwärts-Wärmetauscher (58) vor ihrer Erwärmung in dem Stromabwärts-Wärmetauscher (58) und dann in dem Zwischen-Wärmetauscher (50, 54).

4. Verfahren gemäß irgendeinem der vorhergehenden Ansprüche, **dadurch gekennzeichnet, dass** die Gesamtheit des Stroms von erwärmtem Brennstoff hohen Drucks (146), der von dem Zwischen-Tauscher (50, 54) kommt, in die erste Vorrichtung zur dynamischen Expansion (68) eingebracht wird, wobei die Gesamtheit des Stroms von erwärmtem teilexpandiertem Brennstoff (150), der von dem Zwischen-Tauscher (50, 54) kommt, in die zweite Vorrichtung zur dynamischen Expansion (70) eingebracht wird.

5. Verfahren gemäß irgendeinem der vorhergehenden Ansprüche, **dadurch gekennzeichnet, dass** wenigstens eine Fraktion (136) einer Zwischen-Flüssigkeit (128), die in dem Schritt Zwischen-Abkühlen wiedergewonnen wurde, in dem Stromabwärts-Wärmetauscher (58) und in dem Zwischen-Wärmetauscher (50, 54) erwärmt wird.

6. Verfahren gemäß Anspruch 5, **dadurch gekennzeichnet, dass** die Fraktion (136) der Zwischen-Flüssigkeit (128), die in dem Schritt Zwischen-Abkühlen wiedergewonnen wurde, in dem Stromabwärts-Wärmetauscher (58) unterkühlt wird bevor sie rückgeführt wird in den Stromabwärts-Wärmetauscher (58) und dann in den Zwischen-Wärmetauscher (50, 54).

7. Verfahren gemäß irgendeinem der Ansprüche 3 bis 6, **dadurch gekennzeichnet, dass** wenigstens eine unter der wenigstens einen Fraktion (136) der Zwischen-Flüssigkeit (128) und der Stromabwärts-Flüssigkeit (142) verdampft während ihres Passierens durch den Stromabwärts-Wärmetauscher (58) und durch den Zwischen-Wärmetauscher (50, 54) zum Bilden eines gashaltigen Rezirkulations-Stroms (162), wobei der Rezirkulations-Strom (162) mit dem Strom rohen gekrackten Gases (20) gemischt wird vor dem Passieren des Stroms rohen gekrackten Gases (20) durch wenigstens einen Verdichter (38).

8. Verfahren gemäß irgendeinem der vorhergehenden Ansprüche, **dadurch gekennzeichnet, dass** der Schritt des Behandelns aufweist das Einbringen wenigstens eines Stroms (112, 120, 132), der ausgehend von der Stromaufwärts-Flüssigkeit (112), der Zwischen-Flüssigkeit (120, 128) und/oder der Stromabwärts-Flüssigkeit (142) gebildet ist, in eine Fraktionierungs-Kolonne (62) und das Produzieren, in der Fraktionierungs-Kolonne (62), eines Ethylen-reichen Stroms (166), der dazu bestimmt ist, die Ethylen-reiche Fraktion (12) zu bilden.

9. Verfahren gemäß Anspruch 8, **dadurch gekennzeichnet, dass** im Schritt des Behandelns die Stromaufwärts-Flüssigkeit (112) und die Zwischen-Flüssigkeit (120) in die Fraktionierungs-Kolonne (62) eingebracht werden.

10. Verfahren gemäß irgendeinem der vorhergehenden Ansprüche, **dadurch gekennzeichnet, dass** der Kopfstrom (164), der von der Fraktionierungs-Kolonne (62) kommt, insgesamt zu dem Stromaufwärts-Wärmetauscher (42) hin und vorteilhafterweise zu einem Aufwärm-Stromaufwärts-Tauscher (72) hin befördert wird, bevor er mit dem rohen gekrackten Gas (20) gemischt wird, ohne dass eine Fraktion dieses Stroms (164) kondensiert wird um im Rückfluss in die Fraktionierungs-Kolonne gefördert zu werden.

11. Verfahren gemäß irgendeinem der vorhergehenden Ansprüche, **dadurch gekennzeichnet, dass** die erste Vorrichtung zur dynamischen Expansion (68) und die zweite Vorrichtung zur dynamischen Expansion (70) jeweils wenigstens eine Turbine (68A, 70A) zur dynamischen Expansion aufweisen, vorteilhafterweise jeweils zwischen zwei und drei Turbinen zur dynamischen Expansion aufweisen.

12. Verfahren gemäß irgendeinem der vorhergehenden Ansprüche, **dadurch gekennzeichnet, dass** der Molgehalt an Wasserstoff in dem Strom (44) von Brennstoff hohen Drucks größer als 75% ist.

13. Verfahren gemäß irgendeinem der vorhergehenden Ansprüche, **dadurch gekennzeichnet, dass** die erste Temperatur kleiner als -63°C ist, dass die zweite Temperatur kleiner als -85°C ist und dass die dritte Temperatur kleiner als -120°C ist.

14. Verfahren gemäß irgendeinem der vorhergehenden Ansprüche, **dadurch gekennzeichnet, dass** der erste Kälte-Kreislauf zwischen dem Stromaufwärts-Behälter (46) und dem Stromabwärts-Behälter (60) außerhalb des thermischen Niveaus zwischen -95°C und -102°C ist.

15. Einrichtung (22) zur Fraktionierung eines Stroms (20) gekrackten Gases, das von einer Einrichtung (18) zur Pyrolyse von Kohlenwasserstoffen stammt, zum Erlangen einer Ethylen-reichen Fraktion (12) und eines Stroms (14) aus Brennstoff, der arm an Kohlenwasserstoffen von C₂⁺ ist, wobei die Einrichtung (22) aufweist:
- Stromaufwärts-Mittel zum Abkühlen und Teilkondensieren eines Stroms rohen gekrackten Gases (20), aufweisend Mittel (48A, 48B) zum Wärmetausch zumindest teilweise mit einem ersten, externen Kälte-Kreislauf (44), und Mittel zum Separieren einer Stromaufwärts-Flüssigkeit (112), aufweisend wenigstens einen Stromaufwärts-Behälter (46) zum Bilden eines Zwischen-Stroms (114) gekrackten Gases, das auf eine erste Temperatur vorgekühlt ist,
- Zwischen-Mittel zum Abkühlen und Teilkondensieren des Zwischen-Stroms gekrackten Gases (114), aufweisend wenigstens einen Zwischen-Wärmetauscher (50, 54), und Mittel zum Separieren einer Zwischen-Flüssigkeit (120, 128) in wenigstens einen Zwischen-Separationsbehälter (52, 56) zum Bilden eines Stromabwärts-Stroms (130) gekrackten Gases, das auf eine zweite Temperatur abgekühlt ist, die kleiner als die erste Temperatur ist,
- Stromabwärts-Mittel zum Abkühlen und Teilkondensieren des Stromabwärts-Stroms gekrackten Gases (130), aufweisend wenigstens einen Stromabwärts-Wärmetauscher (58) zum Abkühlen des Stromabwärts-Stroms gekrackten Gases (130) bis auf eine dritte Temperatur, die kleiner als die zweite Temperatur ist,
- einen Stromabwärts-Separator (60) und Mittel zum Einbringen des Stromabwärts-Stroms (140) gekrackten Gases, das von dem Stromabwärts-Wärmetauscher (58) kommt, in den Stromabwärts-Separator (60),
- Mittel zum Wiedergewinnen, am Kopf des Stromabwärts-Separators (60), eines gashaltigen Stroms (144) von Brennstoff hohen Drucks, der arm an Kohlenwasserstoffen von C₂⁺ ist, und Mittel zum Wiedergewinnen, am Fuß des Stromabwärts-Separators (60), einer Stromabwärts-Flüssigkeit (142), die reich an Kohlenwasserstoffen von C₂⁺ ist,
- Mittel zum Passieren des Stroms (144) von Brennstoff hohen Drucks durch den Stromabwärts-Tauscher (58) und den Zwischen-Tauscher (50, 54) zum Bilden eines Stroms (146) von erwärmtem Brennstoff hohen Drucks,
- Mittel zum Expandieren des Stroms (146) von erwärmtem Brennstoff hohen Drucks, aufweisend wenigstens eine erste Vorrichtung (68) zur dynamischen Expansion zum Bilden eines Stroms (148) von teilexpandiertem Brennstoff,
- Mittel zum Erwärmen des Stroms (148) von teilexpandiertem Brennstoff durch den Stromabwärts-Wärmetauscher (58) und den Zwischen-Wärmetauscher (50, 54),
- Mittel zum Behandeln wenigstens einer Flüssigkeit (112, 120, 128), die ausgehend von den Stromaufwärts-Mitteln zum Abkühlen, den Zwischen-Mitteln zum Abkühlen und den Stromabwärts-Mitteln zum Abkühlen erlangt wird, zum Bilden der Ethylen-reichen Fraktion (12),
wobei die Einrichtung (22) aufweist:
- eine zweite Vorrichtung zur dynamischen Expansion (70) und Mittel zum Passieren des Stroms (148) von teilexpandiertem Brennstoff, der von dem Zwischen-Tauscher (50, 54) kommt, durch die zweite Vorrichtung zur dynamischen Expansion (70) zum Bilden eines Stroms (152) von expandiertem Brennstoff,
- Mittel zum Erwärmen des Stroms (152) von expandiertem Brennstoff, der von der zweiten Vorrichtung zur dynamischen Expansion (70) kommt, in dem Stromabwärts-Wärmetauscher (58) und in dem Zwischen-Wärmetauscher (50, 54),
- Mittel zum Verdichten des Stroms (160) von wiedererwärmtem expandiertem Brennstoff, aufweisend wenigstens einen Verdichter (76A, 76B), der mit wenigstens einer Expansionsturbine (68A, 70A) der ersten Vorrichtung zur dynamischen Expansion und/oder der zweiten Vorrichtung zur dynamischen Expansion verbunden ist, zum Bilden des Stroms (14) von Brennstoff, der arm an Kohlenwasserstoffen von C₂⁺ ist, und wobei die thermische Leistung, die erforderlich ist zum Kühlen des Zwischen-Stroms gekrackten Gases (114) zu der zweiten Temperatur hin, in den Zwischen-Wärmetauscher (50, 54) zugeführt wird durch Wärmetausch mit dem Strom (144) von Brennstoff hohen Drucks, durch Wärmetausch mit dem Strom (148) von teilexpandiertem Brennstoff und durch Wärmetausch mit dem Strom (152) von expandiertem Brennstoff, ohne Wärmetausch mit einem externen Kältefluid, das in einem Kältemittelkreislauf zirkuliert.

## Claims

1. A method for fractionating a stream (20) of cracked gas from a hydrocarbon pyrolysis installation (18) to obtain an ethylene-rich cut (12) and a stream (14) of fuel having a low C₂⁺ hydrocarbon content, the method comprising the following steps:
- upstream cooling and partial condensation of a stream of raw cracked gas (20) by at least partial heat exchange with a coolant fluid circulating in a first external refrigeration cycle (44) and separation of an upstream liquid (112) in at least one upstream drum (46) to form an intermediate stream (114) of cracked gas pre-cooled to a first temperature;
- intermediate cooling and partial condensation of the intermediate stream of cracked gas (114) in at least one intermediate heat exchanger (50, 54) and separation of an intermediate liquid (120, 128) in at least one intermediate separation drum (52, 56) to form a downstream stream (130) of cracked gas cooled to a second temperature lower than the first temperature;
- downstream cooling and partial condensation of the downstream stream of cracked gas (130) in at least one downstream heat exchanger (58) to a third temperature lower than the second temperature;
- introducing the partially condensed downstream stream (140) of cracked gas obtained from the downstream heat exchanger (58) in a downstream separator (60);
- recovering, at the head of the downstream separator (60), a high-pressure gas stream (144) of fuel, with a low C₂⁺ hydrocarbon content, and recovering, at the bottom of the downstream separator, a downstream liquid (142), with a high C₂⁺ hydrocarbon content;
- passing the high-pressure fuel stream (144) through the downstream exchanger (58) and the intermediate exchanger (50, 54) to form a heated high-pressure fuel stream (146);
- expansion of the reheated high-pressure fuel stream (146) in at least a first dynamic expander (68) to obtain a partially expanded fuel stream (148);
- heating the partially expanded fuel stream (148) through the downstream exchanger (58) and the intermediate exchanger (50, 54);
- processing at least one liquid (112, 120, 128) obtained during the upstream cooling, intermediate cooling and downstream cooling steps to form the ethylene-rich cut (12);
the method comprising the following steps:
- passage of the partially expanded flow (148) of fuel from the intermediate exchanger (50, 54) into a second dynamic expander (70) to form an expanded stream of fuel (152);
- reheating the expanded fuel stream (152) from the second dynamic expander (70) in the downstream heat exchanger (58) and in the intermediate heat exchanger (50, 54);
- compressing the reheated expanded fuel stream (160) in at least one compressor (76A, 76B) coupled to at least one turbo-expander (68A, 70A) of the first dynamic expander and/or the second dynamic expander to form the stream (14) of fuel having a low C₂⁺ hydrocarbon content; and
the thermal power needed to cool the intermediate stream of cracked gas (114) towards the second temperature is provided in the intermediate heat exchanger (50, 54) by heat exchange with the high-pressure fuel stream (144), by heat exchange with the partially expanded fuel stream (148) and by heat exchange with the expanded fuel stream (152), without heat exchange with an external coolant fluid circulating in a refrigeration cycle.

2. The method according to claim 1, **characterized in that** the thermal power needed to cool the downstream stream of cracked gas (130) to the third temperature is provided in the downstream heat exchanger (58) by heat exchange with the high-pressure fuel stream (144), by heat exchange with the partially expanded fuel stream (148) and by heat exchange with the expanded fuel stream (152), without heat exchange with an external coolant fluid circulating in a refrigeration cycle.

3. The method according to any one of the preceding claims, **characterized in that** it comprises the recovery of the downstream liquid (142) and reheating thereof through the downstream heat exchanger (58), and the intermediate heat exchanger (50, 54),
the downstream liquid being sub-cooled in the downstream heat exchanger (58) before it is reheated in the downstream heat exchanger (58), then in the intermediate heat exchanger (50, 54).

4. The method according to any one of the preceding claims, **characterized in that** all of the reheated high-pressure fuel stream (146) from the intermediate exchanger (50, 54) is introduced into the first dynamic expander (68), all of the reheated partially expanded fuel current (150) from the intermediate exchanger (50, 54) being introduced into the second dynamic expander (70).

5. The method according to any one of the preceding claims, **characterized in that** at least a fraction (136) of an intermediate liquid (128) recovered in the intermediate cooling step is reheated in the downstream heat exchanger (58) and in the intermediate heat exchanger (50, 54).

6. The method according to claim 5, **characterized in that** the fraction (136) of the intermediate liquid (128) recovered in the intermediate cooling step is sub-cooled in the downstream heat exchanger (58) before being reintroduced into the downstream heat exchanger (58), then in the intermediate heat exchanger (50, 54).

7. The method according to any one of claims 3 to 6, **characterized in that** at least one of the at least one fraction (136) of the intermediate liquid (128) and the downstream liquid (142) evaporates during its passage in the downstream heat exchanger (58) and in the intermediate heat exchanger (50, 54) to form a gas recirculation flow (162), the recirculation flow (162) being mixed with the stream of raw cracked gas (20), before the passage of the raw cracked gas (20) in the at least one compressor (38).

8. The method according to any one of the preceding claims, **characterized in that** the processing step comprises the introduction of at least one stream (112, 120, 132) formed from said upstream liquid (112), intermediate liquid (120, 128) and/or downstream liquid (142) in a fractionating column (62) and the production in the fractionating column (62) of a stream (166) with a high ethylene content intended to form the ethylene-rich cut (12).

9. The method according to claim 8, **characterized in that** in the processing step, the upstream liquid (112) and the intermediate liquid (120) are introduced into the fractionating column (62).

10. The method according to any one of the preceding claims, **characterized in that** the overhead stream (164) from the fractionating column (62) is completely conveyed towards the upstream heat exchanger (42) and advantageously towards an upstream reheating exchanger (72), before being mixed with the raw cracked gas (20), without a fraction of the overhead stream (164) being condensed to be sent to the fractionating column (62) as reflux.

11. The method according to any one of the preceding claims, **characterized in that** the first dynamic expander (68) and the second dynamic expander (70) each comprise at least one dynamic turbo-expander (68A, 70A), advantageously each comprise between two and three dynamic turbo-expanders.

12. The method according to any one of the preceding claims, **characterized in that** the molar content of hydrogen in the high-pressure fuel stream (144) is greater than 75%.

13. The method according to any one of the preceding claims, **characterized in that** the first temperature is below - 63° C, **in that** the second temperature is below - 85°C, and **in that** the third temperature is below - 120°C.

14. The method according to any one of the preceding claims, **characterized in that** the first refrigeration cycle is provided without a heat level between - 95°C and - 102°C between the upstream drum (46) and the downstream drum (60).

15. An installation (22) for fractionating a stream (20) of cracked gas from a hydrocarbon pyrolysis installation (18) to obtain an ethylene-rich cut (12) and a stream (14) of fuel having a low C₂⁺ hydrocarbon content, the installation (22) comprising:
- upstream means for cooling and partial condensation of a stream of raw cracked gas (20) including at least partial heat exchange means (48A, 48B) with a first external refrigeration cycle (44) and means for separating an upstream liquid (112) including at least one upstream drum (46) to form an intermediate stream (114) of cracked gas pre-cooled to a first temperature;
- intermediate means for cooling and partial condensation of the intermediate stream of cracked gas (114) including at least one intermediate heat exchanger (50, 54) and means for separating an intermediate liquid (120, 128) including at least one intermediate separation drum (52, 56) to form a downstream stream (130) of cracked gas cooled to a second temperature lower than the first temperature;
- downstream means for cooling and at least partial condensation of the downstream stream of cracked gas (130) including at least one downstream heat exchanger (58) to cool the downstream stream of cracked gas (130) to a third temperature lower than the second temperature;
- a downstream separator (60) and means for introducing the downstream stream (140) of cracked gas from the downstream heat exchanger (58) in the downstream separator (60);
- means for recovering, at the head of the downstream separator (60), a high-pressure gas stream (144) of fuel, with a low C₂+ hydrocarbon content, and means for recovering, at the bottom of the downstream separator (60), a downstream liquid (142) with a high C₂⁺ hydrocarbon content;
- means for passing the high-pressure fuel stream (144) through the downstream exchanger (58) and the intermediate exchanger (50, 54) to form a heated high-pressure fuel stream (146);
- means for expanding the reheated high-pressure fuel stream (146) including at least a first dynamic expander (68) to form a partially expanded fuel stream (148);
- means for reheating the partially expanded fuel stream (148) through the downstream exchanger (58) and the intermediate exchanger (50, 54);
- means for processing at least one liquid (112, 120,128) obtained from the upstream cooling means, intermediate cooling means and downstream cooling means to form the ethylene-rich cut (12);
the installation (22) comprising:
- a second dynamic expander (70) and means for passage of the partially expanded stream (148) of fuel from the intermediate exchanger (50, 54) into the second dynamic expander (70) to form an expanded stream of fuel (152);
- means for reheating the expanded fuel stream (152) from the second dynamic expander (70) in the downstream heat exchanger (58) and in the intermediate heat exchanger (50, 54);
- means for compressing the reheated expanded fuel stream (160) including at least one compressor (76A, 76B) coupled to at least one turbo-expander (68A, 70A) of the first dynamic expander and/or the second dynamic expander to form the stream (14) of fuel having a low C₂⁺ hydrocarbon content,
and in that the thermal power needed to cool the intermediate stream of cracked gas (114) towards the second temperature is provided in the intermediate heat exchanger (50, 54) by heat exchange with the high-pressure fuel stream (144), by heat exchange with the partially expanded fuel stream (148) and by heat exchange with the expanded fuel stream (152), without heat exchange with an external coolant fluid circulating in a refrigeration cycle.
